# EUROPEAN PATENT SPECIFICATION

(11) **EP 3 078 073 B1**
(45) Date of publication and mention of the grant of the patent: **04.10.2017**
(21) Application number: 15725273.5
(22) Date of filing: 18.05.2015
(51) Int. Cl.: H01M 10/42, H01M 10/44, H01M 10/48

(54) **DEVICE AND METHOD FOR CONTROLLING A PLURALITY OF CELLS OF A BATTERY**
VORRICHTUNG UND VERFAHREN ZUR STEUERUNG EINER VIELZAHL VON ZELLEN EINER BATTERIE
DISPOSITIF ET PROCÉDÉ POUR COMMANDER UNE PLURALITÉ DE CELLULES D'UNE BATTERIE

(30) Priority: 18.06.2014 EP 14172889
(43) Date of publication of application: 12.10.2016
(73) Proprietor: Koninklijke Philips N.V., 5656 AE Eindhoven (NL)
(72) Inventor: LUERKENS, Peter, NL-5656 AE Eindhoven (NL); GARCIA TORMO, Albert, NL-5656 AE Eindhoven (NL); ACKERMANN, Bernd, NL-5656 AE Eindhoven (NL)
(74) Representative: van Liempd, Jan
(86) International application number: PCT/EP2015/060827
(87) International publication number: WO 2015/193041

(56) References cited:
- EP-A1- 2 675 001
- US-A1- 2012 242 144
- US-A1- 2013 328 530

## Description

### FIELD OF THE INVENTION

The present invention relates to battery management systems. In particular, the present invention relates to a device and a method for controlling a plurality of cells of a battery.

### BACKGROUND OF THE INVENTION

Stacks of lithium-ion batteries need balancing of the state-of-charge of the battery cells, as there is no natural side reaction, which can provide this. This is done by small power sources or sinks in a battery stack in parallel to each cell or at least each group of parallel cells. This approach intentionally imposes an extra charge or discharge current on individual cells. By fully charging the stack, usually a first cell is reaching 100% state of charge, which is indicated by a sharp rise of voltage. This is used to reset the discharge charge gauge for this particular cell to zero.

Then the cell is connected to a by-pass path allowing the rest of the stack being charged further on without overcharging the first cell. Eventually a second cell reaches its fully charged state and then is connected also to a bypass path. The procedure is continued until all cells reach a fully charged state. Alternatively, the stack may be charged over the main power path until a first cell is fully charged, when the main charger stops. Subsequently, all cells or group of cells, which have not yet reached the fully charged condition, are charged by means of the charge balancing devices, producing an extra, yet small charging current.

US 2011/024 162 3 A1 describes a battery charging system and a method, including a high voltage charger for charging a group or string of series connected battery cells, and a group of individual cell chargers for charging individual ones of the cells. The described charging technique includes detecting at least one cell being charged to a predetermined voltage, and then inhibiting the high voltage charger from further charging any of the cells. The individual cell chargers charge individual ones of the cells, except the at least one cell charged to the predetermined voltage.

WO 2010/041 859 A3 describes an X-ray imaging apparatus, and more particularly, an X-ray imaging apparatus in which a condenser is charged with low battery

WO 2010/041 859 A3 describes an X-ray imaging apparatus, and more particularly, an X-ray imaging apparatus in which a condenser is charged with low battery voltage, and the charged voltage of the capacitor or the sum voltage of the output voltage of the battery serially connected to the capacitor and the charged voltage of the capacitor is used as X-ray generating power.

The described X-ray imaging apparatus is configured such that the battery power and the capacitor power are serially connected to provide power for operating the X-ray imaging apparatus, thus generating power for operating the X-ray imaging apparatus from the low battery power, and obtaining a lightweight and less bulky X-ray imaging apparatus. Further, the described X-ray imaging apparatus senses the charged voltage of the capacitor unit, and cuts off power being applied to the capacitor charging unit from the battery when it is determined that the charging of the capacitor unit is completed, thus reducing the power consumption of the battery.

US 2012/242144 A1 describes a device for controlling a plurality of cells of a battery, the device comprising a battery control module and a main control module.

### SUMMARY OF THE INVENTION

There may be a need to improve the battery management system of batteries comprising a plurality of cells.

These needs are met by the subject-matter of the independent claims. Further exemplary embodiments are evident from the dependent claims and the following description.

An aspect of the invention relates to a device for controlling a plurality of cells of a battery, the device comprising: a battery control module, comprising a plurality of cell control units, each assigned to one of the cells, wherein each cell control unit is configured to change a charge balance of the assigned cell and to measure at least one cell parameter of the assigned cell; and a main control module, which is configured to define a preferred range of the state-of-charge of the battery cells for a charging-discharging-cycle, wherein the preferred range is reduced compared to a full range, the main control module further configured to provide a first group of selected cells, on which a charging-discharging-cycle is performed including a fully charged state within the full range, and a second group of non-selected cells, on which the charging-discharging-cycle is performed within the preferred range.

A further aspect of the invention relates to a battery comprising a plurality of cells and a device according to the first aspect or any implemented form of the first aspect.

A further aspect of the invention relates to an X-ray source comprising a high voltage generator comprising a battery according to the second aspect. A further aspect of the invention relates to a method for controlling a plurality of cells of a battery, the method comprising the steps of: defining a preferred range of the state-of-charge of the battery cells for a charging-discharging-cycle, wherein the preferred.
range is reduced compared to a full range; providing a first group of selected cells, on which a charging-discharging-cycle is performed including a fully charged state within the full range, and providing a second group of non-selected cells, on which the charging-discharging-cycle is performed within the preferred range.

The present advantageously provides that battery stacks produce a voltage which is depending to some extend on the state of charge of the battery. Although this is normally not intended due to application dimensioning reasons, this advantageously provides a reference for detecting the state of the charge of a battery cell.

A lithium-ion battery (also known as Li-ion battery or LIB) is a member of a family of rechargeable battery types in which lithium ions move from the negative electrode to the positive electrode during discharge and back when charging. Li-ion batteries use an intercalated lithium compound as the electrode material, compared to the metallic lithium used in non-rechargeable lithium battery. Li-ion cells utilizing lithium iron phosphate, LiFePO₄, also called LFP battery (with "LFP" standing for "lithium ferrophosphate") and even more rock salt-type LiTiO₂ and spinel-type LiTi₂O₄ show naturally a very flat voltage curve, which is highly appreciated in power electronic applications, as it significantly reduces the necessary design margins in the system significantly.

Except very near to the fully-charged state, the voltage curve of a lithium-ion battery is too flat, e.g. in a battery voltage vs. state of charge diagram, to be useful for calibration of the charge management of the lithium-ion battery, thus introducing, that over time individual cells may drift towards low state of charge without being notice. In case of engaging the battery for its intended purpose, those cells may be over-discharged and thus damaged, or stop the battery operation prematurely.

Therefore, the recalibration of the charge management requires again a full charge, leading to high battery voltage, which has to be considered for margins in the power electronic converters as provided by the present invention. During this process, which may have to be executed once in a month, the system may not be available for normal operation. Furthermore, operation of the batteries in fully loaded condition accelerates aging and reduces lifetime of the cells.

The present invention advantageously avoids these disadvantages during resetting of the charge counters and keeps the stack voltage almost unaffected by the procedure and reduces the time an individual cell is operated at high state-of-charge condition to a minimum. Interruption of normal operation is not necessary and the operating voltage of the system is more constant and can be shifted to higher average voltage without risk for the power converter components.

The present invention advantageously solves this problem by driving only a portion, e.g. the group of selected cells of the stack, maybe the group comprises only one single cell, to the fully charged state to recalibrate the charge management, while the rest of the stack floating on the preferred level, once achieved, the calibrated portion is returned to the preferred level of charge and the procedure is repeated on an another part of the battery stack, e.g. other battery cells.

The present invention advantageously uses at least one charge control block in parallel to each battery cell or at least one in parallel to each group of parallel connected cells. These blocks are designed to change the charge balance of a cell in a controlled way. The present invention advantageously provides devices and methods used in battery management systems.

Simultaneously, these perform measurements on cell quantities such as voltage, temperature, and current, in particular the bypass current through the charge control block. These blocks are connected directly or via a data bus with a controller, which performs battery management by executing a software program, including the charge balancing functions.

The term "State of charge", abbreviated SoC, as used by the present invention may be understood as the equivalent of a fuel gauge for the battery pack. The SoC quantity may be defined as a relative unit of measurement to show the ratio of an amount of energy currently stored in the battery, e.g. the remaining available capacity of a battery, relative to the nominal value.

A SoC quantity SoC=1 refers to a fully charged battery and SoC=0 to a full discharged battery. Alternatively, the units of SoC may be referred to in terms of percentage points (0% = empty; 100% = full). Further, it may be defined that the SoC=1 reference is set to a more higher and SoC=0 to more a lower terminal voltage, such sacrificing lifetime (or even safety). Further down it is possible to have (or allow) the preferred range of SoC within the boundaries of the full range of charge, to allow balancing of the system without penalties on lifetime.

The charge balancing function in the software, which results at the end of a balancing process into a battery stack, in which all cells are within the preferred range of state-of charge, may comprise any number or any combination out of the following steps:
- Definition of a preferred range of the state-of charge, SoC, of the battery cells, e.g. 0.5 < SoC < 0.7, SoC
- Definition of a full range of the state-of charge, SoC, of the battery cells, e.g. 0.5 < SoC < 1.0 including a fully charged state, i.e. SoC equals to one.
- Selection of a cell or a group of cells on which balancing shall be performed
- Control of the battery main charger by using the charge counters of the individual cells, except from the selected cell or group of cells, such that the state-of-charge of these cells is kept within the defined range
- In parallel, charging the selected cell by means of the charge control block, until a fully charged state is indicated by the cell voltage
- Discharging the selected cell by means of the charge control block, until the cell arrives at the average state of charge of the rest of the battery
- Reverting to the cell selection step and choosing some other cell or group of cells.

The procedure can be enhanced further by checking the rest of cells not leaving the preferred state of charge, which is indicated by an abnormal low cell voltage. In this case it is proposed to switch the cell selection to this cell in order to reach at least the preferred range of state of charge again.

The present invention may be operated just as normal so that interruptions are not to be considered. In addition, the maximum stack voltage only differs little from the voltage, which is associated with the preferred range of state-of charge, and allows increasing the average operation voltage for better component utilization and efficiency.

The invention may be applied to batteries which require balancing (e.g. Li-ion, Li-poly batteries) in uninterruptible power sources, where actions for battery management may not interfere with the normal operation, or other equipment which use batteries for power shaping or providing peak power, which benefit from a most constant operating voltage level.

According to an exemplary embodiment of the present invention, the main control module is configured to charge the first group of selected cells by means of the cell control units to a fully charged state-of-charge level and/or to discharge the first group of selected cells by means of the cell control units to a state-of-charge level corresponding to the state-of-charge level of the second group of non-selected cells.

This advantageously provides an improved battery management.

According to an exemplary embodiment of the present invention, the main control module is configured to permute the first group of selected cells over all cells of the battery.

This advantageously provides a complete battery management of all battery cells without losing performance of the energy storage device.

According to an exemplary embodiment of the present invention, the main control module is configured to permute the second group of non-selected cells over all cells of the battery.

This advantageously provides a battery management of all battery cells without losing performance of the energy storage device.

According to an exemplary embodiment of the present invention, the cell control unit is configured to measure as the at least one cell parameter of the assigned cell a voltage, a temperature, or a current or a bypass current of the assigned cell.

This advantageously provides an adapted battery management of the battery cells.

According to an exemplary embodiment of the present invention, the cell control unit is configured to control a state-of-charge level, a current or a bypass current of the assigned cell.

According to an exemplary embodiment of the present invention, the main control module is configured to define as the preferred range of the state-of-charge of the battery cells a range between a minimum value, being higher than the lower limit of the full range of charge, and a maximum value being less than 1.0, of a fully charged state-of-charge level.

According to an exemplary embodiment of the present invention, the main control module is configured to define as the preferred range of the state-of-charge of the battery cells a range between a minimum value, being higher than the lower limit of the full range of charge, but at least 0.5, and a maximum value being less than 0.7, of a fully charged state-of-charge level.

According to an exemplary embodiment of the present invention, the main control module is configured to determine a fully charged state-of-charge of one cell by comparing the cell voltage to a cell voltage threshold value.

According to an exemplary embodiment of the present invention, the main control module is configured to determine, while the charging-discharging-cycle is performed within the full range of the first group of selected cells, a state-of-charge profile of each cell of the first group of selected cells and/or the full-charge capacity of each cell of the first group of selected cells.

A computer program performing the method of the present invention may be stored on a computer-readable medium. A computer-readable medium may be a punched card, a (floppy) disk storage medium, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code or further systems.

The methods, systems and devices described herein may be implemented as software in a Digital Signal Processor, DSP, in a micro-controller, in a FPGA, in a PLD or in any other side-processor or as hardware circuit within an application specific integrated circuit, ASIC.

The present invention can be implemented in digital electronic circuitry, or in computer hardware, firmware, software, or in combinations thereof, e.g. in available hardware of conventional mobile devices or in new hardware dedicated for processing the methods described herein.

The present invention can be implemented for the use of image reconstruction in various image processing applications and aims at demonstrating the usefulness of this transformation for image altering and segmentation tasks.

A more complete appreciation of the invention and the advantages thereof will be more clearly understood by reference to the following schematic drawings, which are not to scale, wherein:
Fig. 1 shows a schematic diagram of a device for controlling a plurality of cells of a battery according to an exemplary embodiment of the invention;
Fig. 2 shows a schematic flowchart diagram of a method for controlling a plurality of cells of a battery according to an exemplary embodiment of the invention; and
Fig. 3 shows a schematic diagram of a device for controlling a plurality of cells of a battery according to an exemplary embodiment of the invention;

### DETAILED DESCRIPTION OF EMBODIMENTS

The illustration in the drawings is purely schematically and does not intend to provide scaling relations or size information. In different drawings, similar or identical elements are provided with the same reference numerals. Generally, identical parts, units, entities or steps are provided with the same reference symbols in the description.

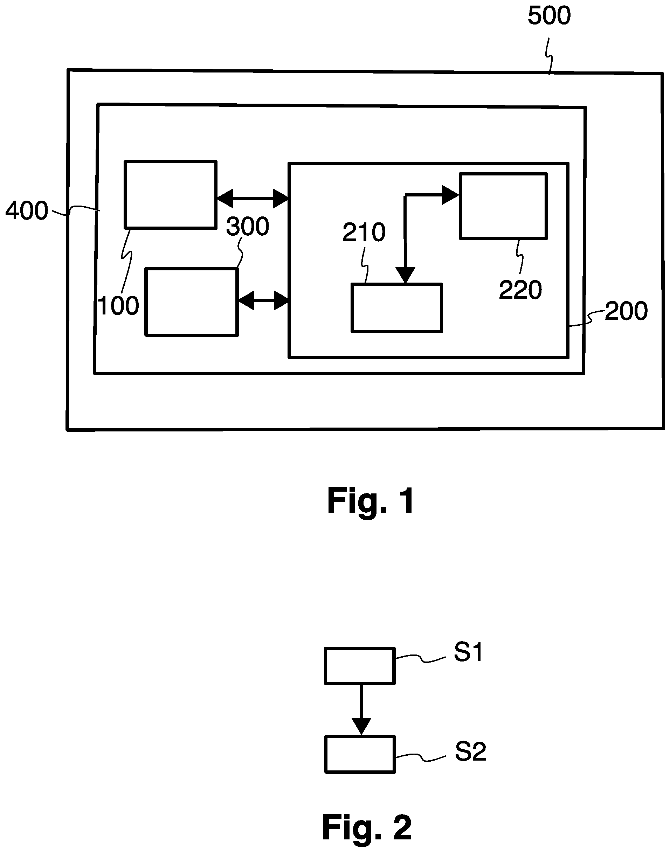

Fig. 1 shows a schematic diagram of a device for controlling a plurality of cells of a battery according to an exemplary embodiment of the invention.

A device 200 for controlling a plurality of cells 110, 120, 130, 140, 150 of a battery 100, the device 200 comprising: a battery control module 210, comprising a plurality of cell control units 214, 224, 234, 244, 254, wherein each cell control unit is assigned to one of the cells, wherein each cell control unit is configured to change a charge balance of the assigned cell and wherein each cell control unit is configured to measure at least one cell parameter of the assigned cell.

The battery 100 may comprise a plurality of cells 110, 120, 130, 140, 150 and a device 200, the device may be integrated into a housing of the battery 100.

The device 200 may further comprise a main control module 220, which is configured to define a preferred range of the state-of-charge of the battery cells for a charging-discharging-cycle, wherein the preferred range is reduced compared to a full range, the main control module further configured to provide a first group of selected cells, on which a charging-discharging-cycle is performed including a fully charged state within the full range, and a second group of non-selected cells, on which a charging-discharging-cycle is performed within the preferred range.

The main control module 220 may be configured to define the full range of the state-of-charge of the battery cells by a first minimum state of charge value and by a first maximum or fully charged state of charge value.

The main control module 220 may be configured to define the first minimum state of charge value of the full range as such, that any application power requirements of the battery may be fulfilled or that a predefined value of a battery's capacity is provided by the battery 100. The battery's capacity may be the amount of electric charge the battery 100 can deliver at the rated voltage. The capacity may be measured in units such as amp-hour (Ah).

The main control module 220 may be configured to define the limited or preferred range of the state of charge between a second minimum state of charge value and a second maximum state of charge value. The second minimum state of charge value of the preferred range may be defined by the main control module 220 at the same or at a corresponding, e.g. the same, or at a lower value as the first minimum state of charge value of the full range. The second maximum state of charge value of the preferred range may be lower than the first minimum state of charge value of the full range as defined by the main control module 220.

The battery 100 or the cells 110, 120, 130, 140, 150 of the battery may be connected, directly or indirectly over the device 200 as illustrated in Figure 1, to a main charger 300 during a charging process. During a discharging process the battery 100 may supply power to the same device, which then corresponds to an electrical consumer 300.

An X-ray source 500 may comprise a high voltage generator 400 comprising the battery 100 and the device 200.

Fig. 2 shows a schematic flowchart diagram of a method for controlling a plurality of cells of a battery according to an exemplary embodiment of the invention.

The method is visualized in terms of a block diagram. The method may comprise the two steps S 1 and S2, or even further steps.

As a first step of the method, defining S1 a preferred range of the state-of charge of the battery cells for a charging-discharging-cycle is conducted, wherein the preferred range is reduced compared to a full range.

As a second step of the method, providing S2 a first group of selected cells, on which a charging-discharging-cycle is performed including the fully charged state within the full range, and providing a second group of non-selected cells is conducted, on which a charging-discharging-cycle is performed within the preferred range.

According to an exemplary embodiment of the invention, these steps may be carried out simultaneously, divided into multiple operations or tasks or iteratively repeated. The iteration of the steps may be implemented recursively, by count-controlled loops or by condition-controlled loops.

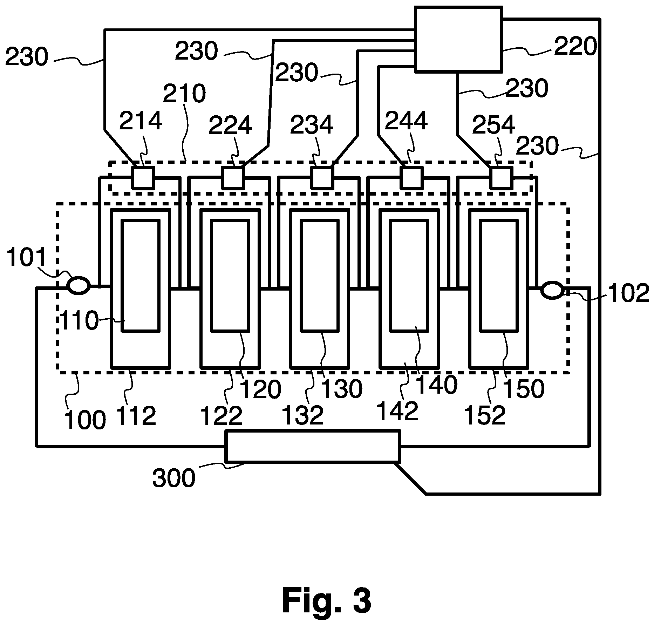

Fig. 3 shows a schematic diagram of a device for controlling a plurality of cells of a battery according to an exemplary embodiment of the invention.

A device 200 may comprise a battery control module 210 and a main control module 220. The battery control module 210 may comprise a plurality of cell control units 214, 224, 234, 244, 254. One cell control unit 214 is couple to one cell 110, to which the cell control unit 214 is assigned to. Each of the cells 110, 120, 130, 140, 150 may be integrated in one of the cell housings 112, 122, 132, 142, 152.

In another exemplary embodiment of the present invention, the cell control units 214, 224, 234, 244, 254 may be connected via a control bus 230 to the main control module 220, receiving specific commands regarding the charging or discharging demands of the assigned cell 110, 120, 130, 140, 150 of the cell control units 214, 224, 234, 244, 254.

In another exemplary embodiment of the present invention, the main charger 300 may be connected via a control bus 230 to the main control module 220, receiving commands regarding the charging or discharging demands of the battery 100.

In another exemplary embodiment of the present invention, the battery 100 may comprise a positive terminal 101 and a negative terminal 102, via the terminals 101, 102 the battery 100 may be coupled to the main charger 300.

In another exemplary embodiment of the present invention, the main control module 220 may implement a battery status system, such as a coulomb-counting system ("CCS") which calculates capacity of the battery 100 by measuring current flow into and out of the battery 100 using the plurality of cell control units 214, 224, 234, 244, 254 and integrating the current flow to and from the cells 110, 120, 130, 140, 150 over time.

In another exemplary embodiment of the present invention, a computer program or a computer program element is provided that is characterized by being adapted to execute the method steps of the method according to one of the preceding embodiments, on an appropriate system.

According to a further exemplary embodiment of the present invention, the computer program element might therefore be stored on a computer unit, which might also be part of an embodiment of the present invention. This computing unit may be adapted to perform or induce a performing of the steps of the method described above.

Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it, which computer program element is described by the preceding section.

A computer program may be stored and/or distributed on a suitable medium, such as an optical storage medium or a solid state medium supplied together with or as part of other hardware, but may also be distributed in other forms, such as via the Internet or other wired or wireless telecommunication systems.

Therefore, the computer program may also be presented over a network like the World Wide Web and can be downloaded into the working memory of a data processor from such a network.

According to a further exemplary embodiment of the present invention, a medium for making a computer program element available for downloading is provided, the computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims.

However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A device (200) for controlling a plurality of cells (110, 120, 130, 140, 150) of a battery (100), the device comprising:
- a battery control module (210), comprising a plurality of cell control units (214, 224, 234, 244, 254), wherein each cell control unit (214; 224; 234; 244; 254) is assigned to one of the cells (110; 120; 130; 140; 150) and is configured to change a charge balance of the assigned cell and to measure at least one cell parameter of the assigned cell; and
- a main control module (220), which is configured to define a preferred range of the state-of charge of the battery cells (110, 120, 130, 140, 150) for a charging-discharging-cycle,
wherein the preferred range is reduced compared to a full range,
**characterized in that** the main control module (220) is further configured to provide a first group of selected cells, on which the charging-discharging-cycle is performed including a fully charged state within the full range, and a second group of non-selected cells, on which the charging-discharging-cycle is performed within the preferred range.

2. The device according to claim 1,
**characterized in that** the main control module (220) is configured to charge the first group of selected cells by means of the cell control units to a fully charged state-of charge level and/or to discharge the first group of selected cells by means of cell control units (214; 224; 234; 244; 254) to a state-of-charge level corresponding to the state-of-charge level of the second group of non-selected cells.

3. The device according to claim 1 or 2,
**characterized in that** the main control module (220) is configured to permute the first group of selected cells over all cells of the battery.

4. The device according to one of the preceding claims 1 to 3,
**characterized in that** the main control module (220) is configured to permute the second group of non-selected cells over all cells of the battery.

5. The device according to one of the preceding claims 1 to 4,
**characterized in that** cell control unit (214; 224; 234; 244; 254) is configured to measure as the at least one cell parameter of the assigned cell a voltage, a temperature, or a current or a bypass current of the assigned cell.

6. The device according to one of the preceding claims 1 to 5,
**characterized in that** the cell control unit (214; 224; 234; 244; 254) is configured to control a state-of-charge level, a current or a bypass current of the assigned cell.

7. The device according to one of the preceding claims 1 to 6,
**characterized in that** the main control module (220) is configured to define as the preferred range of the state-of-charge of the battery cells a range between a minimum value, being higher than the lower limit of the full range of charge, and a maximum value being less than 1.0, of a fully charged state-of-charge level.

8. The device according to one of the preceding claims 1 to 6,
**characterized in that** the main control module (220) is configured to define as the preferred range of the state-of-charge of the battery cells a range between a minimum value, being higher than the lower limit of the full range of charge, but at least 0.5, and a maximum value being less than 0.7, of a fully charged state-of-charge level.

9. The device according to one of the preceding claims 1 to 8,
**characterized in that** the main control module (220) is configured to determine a fully charged state-of-charge of one cell by comparing the cell voltage to a cell voltage threshold value.

10. The device according to one of the preceding claims 1 to 9,
**characterized in that** the main control module (220) is configured to determine, while the charging-discharging-cycle is performed within the full range of the first group of selected cells, a state-of-charge profile of each cell of the first group of selected cells and/or the full-charge capacity of each cell of the first group of selected cells.

11. A battery (100) comprising a plurality of cells (110, 120, 130, 140, 150) and a device (200) according to one of the preceding claims 1 to 10.

12. An X-ray source (500) comprising a high voltage generator (400) comprising a battery (100) according to claim 11.

13. A method for controlling a plurality of cells (110, 120, 130, 140, 150) of a battery (100), the method comprising the steps of:
- Defining (S1) a preferred range of the state-of-charge of the battery cells for a charging-discharging-cycle, wherein the preferred range is reduced compared to a full range; and **characterized in**:
- Providing (S2) a first group of selected cells, on which a charging-discharging-cycle is performed including a fully charged state within the full range, and providing a second group of non-selected cells, on which the charging-discharging-cycle is performed within the preferred range.

14. The method according to claim 13,
wherein the step of performing a charging-discharging-cycle on the first group of selected cells over the full range further comprises charging the first group of selected cells by means of the cell control units to a fully charged state-of-charge level.

15. The method according to claim 13 or 14,
wherein the step of performing a charging-discharging-cycle on the first group of selected cells over the full range further comprises discharging the first group of selected cells by means of the cell control units (214; 224; 234; 244; 254)to a state-of-charge level corresponding to the state-of-charge level of the second group of non-selected cells.

## Patentansprüche

1. Vorrichtung (200) zum Steuern einer Vielzahl von Zellen (110, 120, 130, 140, 150) einer Batterie (100), wobei die Vorrichtung umfasst:
- ein Batteriesteuermodul (210), das eine Vielzahl von Zellensteuereinheiten (214, 224, 234, 244, 254) umfasst, wobei jede Zellensteuereinheit (214; 224; 234; 244; 254) einer der Zellen (110; 120; 130; 140; 150) zugeordnet ist und dazu eingerichtet ist, eine Ladebilanz der zugeordneten Zellen zu ändern und mindestens einen Zellenparameter der zugeordneten Zelle zu messen; und
- ein Hauptsteuermodul (220), das dazu eingerichtet ist, einen bevorzugten Bereich des Ladezustands der Batteriezellen (110, 120, 130, 140, 150) für einen Lade-Entlade-Zyklus zu definieren,
wobei der bevorzugte Bereich im Vergleich zu einem vollen Bereich verringert ist,
**dadurch gekennzeichnet, dass** das Hauptsteuermodul (220) weiter dazu eingerichtet ist, eine erste Gruppe von ausgewählten Zellen bereitzustellen, an denen der Lade-Entlade-Zyklus einschließlich eines vollständig geladenen Zustands innerhalb des vollen Bereichs durchgeführt wird, und eine zweite Gruppe von nicht ausgewählten Zellen, an denen der Lade-Entlade-Zyklus innerhalb des bevorzugten Bereichs durchgeführt wird.

2. Vorrichtung nach Anspruch 1,
**dadurch gekennzeichnet, dass** das Hauptsteuermodul (220) dazu eingerichtet ist, die erste Gruppe von ausgewählten Zellen mittels der Zellensteuereinheiten auf ein vollständig geladenes Ladezustandsniveau zu laden und/oder die erste Gruppe von ausgewählten Zellen mittels Zellensteuereinheiten (214; 224; 234; 244; 254) auf ein Ladezustandsniveau zu entladen, das dem Ladezustandsniveau der zweiten Gruppe von nicht ausgewählten Zellen entspricht.

3. Vorrichtung nach Anspruch 1 oder 2,
**dadurch gekennzeichnet, dass** das Hauptsteuermodul (220) dazu eingerichtet ist, die erste Gruppe von ausgewählten Zellen über alle Zellen der Batterie zu permutieren.

4. Vorrichtung nach einem der vorhergehenden Ansprüche 1 bis 3,
**dadurch gekennzeichnet, dass** das Hauptsteuermodul (220) dazu eingerichtet ist, die zweite Gruppe von nicht ausgewählten Zellen über alle Zellen der Batterie zu permutieren.

5. Vorrichtung nach einem der vorhergehenden Ansprüche 1 bis 4,
**dadurch gekennzeichnet, dass** Zellensteuereinheit (214; 224; 234; 244; 254) dazu eingerichtet ist, als den mindestens einen Zellenparameter der zugeordneten Zelle eine Spannung, eine Temperatur, oder einen Strom oder einen Bypassstrom der zugeordneten Zelle zu messen.

6. Vorrichtung nach einem der vorhergehenden Ansprüche 1 bis 5,
**dadurch gekennzeichnet, dass** die Zellensteuereinheit (214; 224; 234; 244; 254) dazu eingerichtet ist, ein Ladezustandsniveau, einen Strom oder einen Bypassstrom der zugeordneten Zelle zu steuern.

7. Vorrichtung nach einem der vorhergehenden Ansprüche 1 bis 6,
**dadurch gekennzeichnet, dass** das Hauptsteuermodul (220) dazu eingerichtet ist, als den bevorzugten Bereich des Ladezustands der Batteriezellen einen Bereich zwischen einem Minimalwert, der höher als die Untergrenze des vollen Ladebereichs ist, und einem Maximalwert zu definieren, der weniger als 1,0 eines vollständig geladenen Ladezustandsniveaus ist.

8. Vorrichtung nach einem der vorhergehenden Ansprüche 1 bis 6,
**dadurch gekennzeichnet, dass** das Hauptsteuermodul (220) dazu eingerichtet ist, als den bevorzugten Bereich des Ladezustands der Batteriezellen einen Bereich zwischen einem Minimalwert, der höher als die Untergrenze des vollen Ladebereichs, aber mindestens 0,5 ist, und einem Maximalwert zu definieren, der weniger als 0,7 eines vollständig geladenen Ladezustandsniveaus ist.

9. Vorrichtung nach einem der vorhergehenden Ansprüche 1 bis 8,
**dadurch gekennzeichnet, dass** das Hauptsteuermodul (220) dazu eingerichtet ist, einen vollständig geladenen Ladezustand einer Zelle durch Vergleichen der Zellenspannung mit einem Zellenspannungs-Schwellenwert zu bestimmen.

10. Vorrichtung nach einem der vorhergehenden Ansprüche 1 bis 9,
**dadurch gekennzeichnet, dass** das Hauptsteuermodul (220) dazu eingerichtet ist, während der Lade-Entlade-Zyklus innerhalb des vollen Bereichs der ersten Gruppe von ausgewählten Zellen durchgeführt wird, ein Ladezustandsprofil jeder Zelle der ersten Gruppe von ausgewählten Zellen und/oder die volle Ladekapazität jeder Zelle der ersten Gruppe von ausgewählten Zellen zu bestimmen.

11. Batterie (100), umfassend eine Vielzahl von Zellen (110, 120, 130, 140, 150) und eine Vorrichtung (200) nach einem der vorhergehenden Ansprüche 1 bis 10.

12. Röntgenquelle (500), umfassend einen Hochspannungsgenerator (400), der eine Batterie (100) nach Anspruch 11 umfasst.

13. Verfahren zum Steuern einer Vielzahl von Zellen (110, 120, 130, 140, 150) einer Batterie (100), wobei das Verfahren die Schritte umfasst des:
- Definierens (S1) eines bevorzugten Bereichs des Ladezustands der Batteriezellen für einen Lade-Entlade-Zyklus, wobei der bevorzugte Bereich im Vergleich zu einem vollen Bereich verringert ist;
und gekennzeichnet im:
- Bereitstellen (S2) einer ersten Gruppe von ausgewählten Zellen, an denen ein Lade-Entlade-Zyklus einschließlich eines vollständig geladenen Zustands innerhalb des vollen Bereichs durchgeführt wird, und Bereitstellen einer zweiten Gruppe von nicht ausgewählten Zellen, an denen der Lade-Entlade-Zyklus innerhalb des bevorzugten Bereichs durchgeführt wird.

14. Verfahren nach Anspruch 13,
wobei der Schritt des Durchführens eines Lade-Entlade-Zyklus an der ersten Gruppe von ausgewählten Zellen über den vollen Bereich weiter das Laden der ersten Gruppe von ausgewählten Zellen mittels der Zellensteuereinheiten auf ein vollständig geladenes Ladezustandsniveau umfasst.

15. Verfahren nach Anspruch 13 oder 14,
wobei der Schritt des Durchführens eines Lade-Entlade-Zyklus an der ersten Gruppe von ausgewählten Zellen über den vollen Bereich weiter das Entladen der ersten Gruppe von ausgewählten Zellen mittels der Zellensteuereinheiten (214; 224; 234; 244; 254) auf ein Ladezustandsniveau umfasst, das dem Ladezustandsniveau der zweiten Gruppe von nicht ausgewählten Zellen entspricht.

## Revendications

1. Dispositif (200) pour commander une pluralité de cellules (110, 120, 130, 140, 150) d'une batterie (100), le dispositif comprenant :
- un module de commande de batterie (210), comprenant une pluralité d'unités de commande de cellule (214, 224, 234, 244, 254), dans lequel chaque unité de commande de cellule (214, 224, 234, 244, 254) est assignée à l'une des cellules (110, 120, 130, 140, 150) et est configurée pour changer un équilibre de charge de la cellule assignée et pour mesurer au moins un paramètre de cellule de la cellule assignée ; et
- un module de commande principal (220), qui est configuré pour définir une plage préférée de l'état de charge des cellules de batterie (110, 120, 130, 140, 150) pour un cycle de chargement-déchargement,
dans lequel la plage préférée est réduite par rapport à une plage complète,
**caractérisé en ce que** le module de commande principal (220) est en outre configuré pour fournir un premier groupe de cellules sélectionnées, sur lesquelles le cycle de chargement-déchargement est effectué, comprenant un état complètement chargé à l'intérieur de la plage complète, et un deuxième groupe de cellules non sélectionnées, sur lesquelles le cycle de chargement-déchargement est effectué à l'intérieur de la plage préférée.

2. Dispositif selon la revendication 1,
**caractérisé en ce que** le module de commande principal (220) est configuré pour charger le premier groupe de cellules sélectionnées au moyen des unités de commande de cellule à un niveau d'état de charge complètement chargé et/ou décharger le premier groupe de cellules sélectionnées au moyen d'unités de commande de cellule (214, 224, 234, 244, 254) à un niveau d'état de charge correspondant au niveau d'état de charge du deuxième groupe de cellules non sélectionnées.

3. Dispositif selon la revendication 1 ou 2,
**caractérisé en ce que** le module de commande principal (220) est configuré pour permuter le premier groupe de cellules sélectionnées sur toutes les cellules de la batterie.

4. Dispositif selon l'une des revendications 1 à 3,
**caractérisé en ce que** le module de commande principal (220) est configuré pour permuter le deuxième groupe de cellules non sélectionnées sur toutes les cellules de la batterie.

5. Dispositif selon l'une des revendications 1 à 4,
**caractérisé en ce que** l'unité de commande de cellule (214, 224, 234, 244, 254) est configurée pour mesurer, en tant que l'au moins un paramètre de cellule de la cellule assignée, une tension, une température, ou un courant ou un courant de dérivation de la cellule assignée.

6. Dispositif selon l'une des revendications 1 à 5,
**caractérisé en ce que** l'unité de commande de cellule (214, 224, 234, 244, 254) est configurée pour commander un niveau d'état de charge, un courant ou un courant de dérivation de la cellule assignée.

7. Dispositif selon l'une des revendications 1 à 6,
**caractérisé en ce que** le module de commande principal (220) est configuré pour définir, en tant que la plage préférée de l'état de charge des cellules de batterie, une plage entre une valeur minimale, qui est supérieure à la limite inférieure de la plage de charge complète, et une valeur maximale, qui est inférieure à 1,0, d'un niveau d'état de charge complètement chargé.

8. Dispositif selon l'une des revendications 1 à 6,
**caractérisé en ce que** le module de commande principal (220) est configuré pour définir, en tant que la plage préférée de l'état de charge des cellules de batterie, une plage entre une valeur minimale, qui est supérieure à la limite inférieure de la plage de charge complète, mais au moins égale à 0,5, et une valeur maximale, qui est inférieure à 0,7, d'un niveau d'état de charge complètement chargé.

9. Dispositif selon l'une des revendications 1 à 8,
**caractérisé en ce que** le module de commande principal (220) est configuré pour déterminer un état de charge complètement chargé d'une cellule par la comparaison de la tension de cellule à une valeur de seuil de tension de cellule.

10. Dispositif selon l'une des revendications 1 à 9,
**caractérisé en ce que** le module de commande principal (220) est configuré pour déterminer, pendant que le cycle de chargement-déchargement est effectué à l'intérieur de la plage complète du premier groupe de cellules sélectionnées, un profil d'état de charge de chaque cellule du premier groupe de cellules sélectionnées et/ou la capacité de charge complète de chaque cellule du premier groupe de cellules sélectionnées.

11. Batterie (100) comprenant une pluralité de cellules (110, 120, 130, 140, 150) et un dispositif (200) selon l'une des revendications 1 à 10.

12. Source de rayons X (500) comprenant un générateur de haute tension (400) comprenant une batterie (100) selon la revendication 11.

13. Procédé pour commander une pluralité de cellules (110, 120, 130, 140, 150) d'une batterie (100), le procédé comprenant les étapes de :
- la définition (S1) d'une plage préférée de l'état de charge des cellules de batterie pour un cycle de chargement-déchargement, dans lequel la plage préférée est réduite par rapport à une plage complète ; et
**caractérisé par** :
- la fourniture (S2) d'un premier groupe de cellules sélectionnées, sur lesquelles un cycle de chargement-déchargement est effectué, comprenant un état complètement chargé à l'intérieur de la plage complète, et la fourniture d'un deuxième groupe de cellules non sélectionnées, sur lesquelles le cycle de chargement-déchargement est effectué à l'intérieur de la plage préférée.

14. Procédé selon la revendication 13,
dans lequel l'étape de l'exécution d'un cycle de chargement-déchargement sur le premier groupe de cellules sélectionnées sur la plage complète comprend en outre le chargement du premier groupe de cellules sélectionnées au moyen des unités de commande de cellule à un niveau d'état de charge complètement chargé.

15. Procédé selon la revendication 13 ou 14,
dans lequel l'étape de l'exécution d'un cycle de chargement-déchargement sur le premier groupe de cellules sélectionnées sur la plage complète comprend en outre le déchargement du premier groupe de cellules sélectionnées au moyen des unités de commande de cellule (214, 224, 234, 244, 254) à un niveau d'état de charge correspondant au niveau d'état de charge du deuxième groupe de cellules non sélectionnées.
